**Europäisches Patentamt**

**European Patent Office**

**Office européen des brevets**

(19)

(11) Veröffentlichungsnummer : **0 477 133 A1**

# (12) EUROPÄISCHE PATENTANMELDUNG

(21) Anmeldenummer : **91810643.6**

(22) Anmeldetag : **14.08.91**

(51) Int. Cl.$^5$ : **G01K 13/02**

(30) Priorität : **10.09.90 CH 2936/90**

(43) Veröffentlichungstag der Anmeldung :
**25.03.92 Patentblatt 92/13**

(84) Benannte Vertragsstaaten :
**CH DE LI**

(71) Anmelder : **GEBRÜDER SULZER
AKTIENGESELLSCHAFT
Zürcherstrasse 9
CH-8401 Winterthur (CH)**

(72) Erfinder : **Inhelder, Ernst
Römerhofstrasse 22
CH-8542 Wiesendangen (CH)**
Erfinder : **Wagner, Udo Wolfram
St. Goergenstrasse 28
CH-8400 Winterthur (CH)**

(54) **Tieftemperaturmesseinrichtung.**

(57)   Die Erfindung beschreibt eine Tieftemperaturmesseinrichtung mit einem Sensor (5) und einer Tauchhülse (4), die durch den Innenmantel (2) eines Tieftemperaturbehälters (1) in ein Fluid eintaucht und den Sensor (5) in sich aufnimmt. Der Sensor (5) ist durch ein Verbindungsrohr (6) zwischen Tauchhülse (4) und Aussenmantel (3) des Tieftemperaturbehälters (1) einbringbar und über ein mehradriges Elektrokabel (7) mit der der Umgebung ausserhalb des Aussenmantels (3) verbunden. Die Tauchhülse (4) weist Durchbrüche (9) auf, durch welche der Sensor (5) vom Fluid (10) umspülbar ist und durch welche ebenfalls Adern (8) des Elektrokabels (7) einzeln vom Fluid (10) auf einer Länge von mehr als 100 Aderdurchmessern umspülbar sind. Der Sensor (5) und die Adern (8), welche in ihrer Länge L wendelförmig aufgewickelt sind, sind auf einem Trägerkörper (11) befestigt. Dieser ist durch Stossen des Elektrokabels (7) von aussen einbringbar und wird über Führungselemente (17, 18) in der Tauchhülse (4) seitlich positioniert.

EP 0 477 133 A1

Fig. 1

Tieftemperaturmesseinrichtung

Die Erfindung handelt von einer Tieftemperaturmesseinrichtung bestehend aus einem Sensor, aus einer Tauchhülse, die durch den Innenmantel eines Tieftemperaturbehälters in ein Fluid eintaucht und den Sensor in sich aufnimmt, aus einem Verbindungsrohr zwischen Tauchhülse und Aussenmantel des Tieftemperaturbehälters, durch welches der Sensor einbringbar ist und durch welches der Sensor über ein mehradriges Elektrokabel mit der Umgebung ausserhalb des Aussenmantels verbunden ist.

Tieftemperaturgefässe werden beispielsweise als cold box oder für Tieftemperaturprozessleitungen verwendet. In der Regel weisen diese Gefässe einen fluidführenden Innenmantel auf, der von einem Aussenmantel zur Atmosphäre hin umgeben ist, wobei der Raum zwischen Aussen- und Innenmantel evakuiert und teilweise mit Strahlungsisolationsmaterial versehen ist, um den Wärmeeinfall niedrig zu halten.

Zur Temperaturmessung wurden bisher auswechselbare Temperaturfühler in taschenähnlichen Hülsen, die den Innenmantel des Tieftemperaturbehälters abdichten, angeordnet, wobei die Hülsen bis aus dem Aussenmantel herausgeführt sind. Die Taschen sollten nach der Installation der Temperaturfühler gegen Atmosphäre abgedichtet und ebenfalls evakuiert werden, um den Wärmeeinfall zum Temperaturfühler klein zu halten. Im weiteren muss die Wandstärke dieser Hülsen so dick gehalten werden, dass sie Strömungskräften vom bewegten Fluid und mechanischen Schwingungen widerstehen können und der Temperaturfühler sollte möglichst gut im taschenähnlichen Bereich der Hülse anliegen. Die Messgenauigkeit solcher Systeme hängt sehr stark vom Wärmeeinfall am Temperaturfühler, vom Wärmeübergang der Hülsen zum Temperaturfühler und von der Pufferwirkung der Masse der Tauchhülse zwischen Temperaturfühler und Fluid ab.

Hier schafft die Erfindung Besserung. Aufgabe der Erfindung ist es, die Voraussetzungen für eine schnelle und genaue Temperaturmessung zu schaffen. Gemäss der Erfindung wird die Aufgabe dadurch gelöst, dass die Tauchhülse Durchbrüche aufweist, durch welche der Sensor vom Fluid umspülbar ist und dass innerhalb der Tauchhülse ebenfalls durch Durchbrüche Adern des Elektrokabels einzeln vom Fluid auf einer Länge L von mehr als 100 Aderdurchmessern umspülbar sind.

Die Vorteile der Erfindung sind darin zu sehen, dass keine Verzögerungen beim Wärmeübergang vom Fluid zum Sensor stattfinden, dass der Wärmeeinfall zum Sensor und seiner Umgebung extrem niedrig gehalten wird und dass der Sensor unter Betriebsbedingungen auswechselbar ist. Die abhängigen Ansprüche 2 bis 9 beziehen sich auf vorteilhafte Weiterbildungen der Erfindung.

Im folgenden wird die Erfindung anhand von Ausführungsbeispielen beschrieben. Es zeigen:

Fig. 1 Einen schematischen Ausschnitt des Innenmantels eines Tieftemperaturbehälters mit Tauchhülse und darin positioniert einen Trägerkörper mit Sensor und mit elektrischem Uebertragungskabel;

Fig. 2 Einen schematischen Ausschnitt des Aussenmantels eines Tieftemperaturbehälters mit Verbindungsrohr durch den Aussenmantel, welches ausserhalb des Aussenmantels eine seitliche Abzweigung aufweist, und

Fig. 3 Eine Anordnung gemäss Fig. 2, jedoch mit einer seitlichen Abzweigung innerhalb des Aussenmantels.

Die Figuren zeigen eine Tieftemperaturmesseinrichtung mit einem Sensor und einer Tauchhülse, die durch den Innenmantel eines Tieftemperaturbehälters in ein Fluid eintaucht und den Sensor in sich aufnimmt. Der Sensor ist durch ein Verbindungsrohr zwischen Tauchhülse und Aussenmantel des Tieftemperaturbehälters einbringbar und über ein mehradriges Elektrokabel mit der der Umgebung ausserhalb des Aussenmantels verbunden. Die Tauchhülse weist Durchbrüche auf, durch welche der Sensor vom Fluid umspülbar ist und durch welche ebenfalls Adern des Elektrokabels einzeln vom Fluid auf einer Länge von mehr als 100 Aderdurchmessern umspülbar sind. Der Sensor und die Adern, welche in ihrer Länge L wendelförmig aufgewickelt sind, sind auf einem Trägerkörper befestigt. Dieser ist durch Stossen des Elektrokabels von aussen einbringbar und wird über Führungselemente in der Tauchhülse seitlich positioniert.

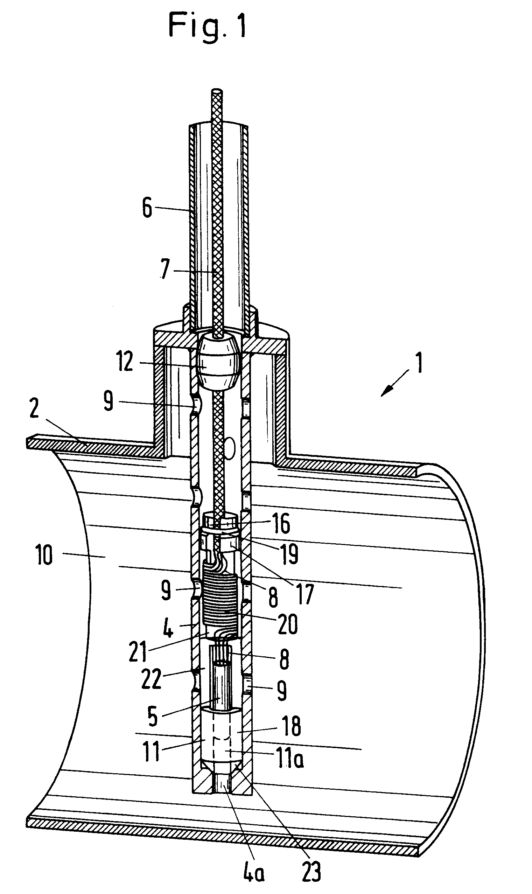

Die Fig. 1 zeigt einen Trägerkörper 11 mit einem unteren zylindrischen Führungsstück 18, das eine Anschrägung 23 zum Zentrieren beim Einbringen in die Tauchhülse 4 und das eine stirnseitige Bohrung 11a für die Aufnahme des Sensors 5 aufweist. Der Sensor 5 ist mit Spiel einseitig durch Kleben an der Mantelfläche der Bohrung 11a befestigt und ragt in den Bereich hinein, in dem der Trägerkörper 11 hälftig zu einer Halbschale 22 weggefrässt ist. Durch die stirnseitigen Bohrungen 4a, 11a in Tauchhülse 4 und Trägerkörper 11 kann Fluid 10 entlang dem Sensor 5 in den Bereich der Halbschale 22 gelangen, der ausserdem über Bohrungen 9 in der Tauchhülse 4 mit dem Fluid 10 verbunden ist. Der obere Teil des Trägerkörpers 11 ist als zylindrischer Führungskragen 17 ausgebildet und weist in seiner Achse einen Schlitz 16 auf, in dem das mehradrige Elektrokabel 7 mit seiner Isolation durch eine Halteklammer 19 befestigt ist. Zwischen dem Führungskragen 17 und dem Sensor 5 sind die einzelnen Adern 8 des Elektrokabels 7 freigelegt und wendelförmig entlang dem Trägerkörper 11 auf einer Länge L die grösser als 100 Aderdurchmesser ist, aufgewickelt. Die wendelförmig aufgewickelten Adern 8 haben mindestens einen Abstand von einem Aderdurchmesser zur Innenwand der Tauchhülse 4, damit sie vom Fluid 10 durch Bohrungen 9 in der Tauchhülse 4 auf ihrer ganzen Länge L zur Wärmeabfuhr umspülbar sind. Ausserdem empfiehlt es sich auch die Adern 8 und den sie stützenden Wickeldurchmesser 21 gegenüber den Führungselementen 17, 18 vom Trägerkörper 11 zurückzusetzen, damit sie beim Einschieben von aussen nicht in Rohrkrümmungen des Verbindungsrohrs 6 oder beim Uebergang von Verbindungsrohr 6 zur Tauchhülse 4 verletzt werden. Am Elektrokabel 7 ist auf Höhe des Uebergangs zwischen Verbindungsrohr 6 und Tauchhülse 4 eine Konvektionsbremse 12 in Form eines angeschrägten zylindrischen Füllkörpers angebracht, der mit wenig Spiel in die Tauchhülse 4 eintaucht. Der Abstand zwischen der Konvektionsbremse 12 und dem Führungskragen 17 des Trägerkörpers 11 ist so gross bemessen, dass der dazwischenliegende Teil des Elektrokabels 7 durch mehrere Bohrungen 9 in der Tauchhülse 4 vom Fluid 10 umspült wird. Durch die Bohrungen 9 entsteht bei ausreichender Festigkeit der Tauchhülse 4 ein Wärmestau wegen Querschnittsverminderung für durch Wärmeleitung einfallende Wärme. Gleichzeitig wird auch die Uebergangsfläche zum Fluid 10 vergrössert und eine direkte Wärmeabfuhr vom Elektrokabel 7 zum Fluid 10 erreicht. Weitere Konvektionsbremsen 12 können im Bereich des Verbindungsrohrs 6 am Elektrokabel 7 angebracht werden.

Die Steifigkeit des Elektrokabels 7 mit seiner isolierenden Ummantelung ist so hoch gewählt, dass der mit Sensor 5 und den Wendeln 20 bestückte Trägerkörper 11 durch Stossen des Elektrokabels 7 von aussen bis in die Tauchhülse 4 einschiebbar ist.

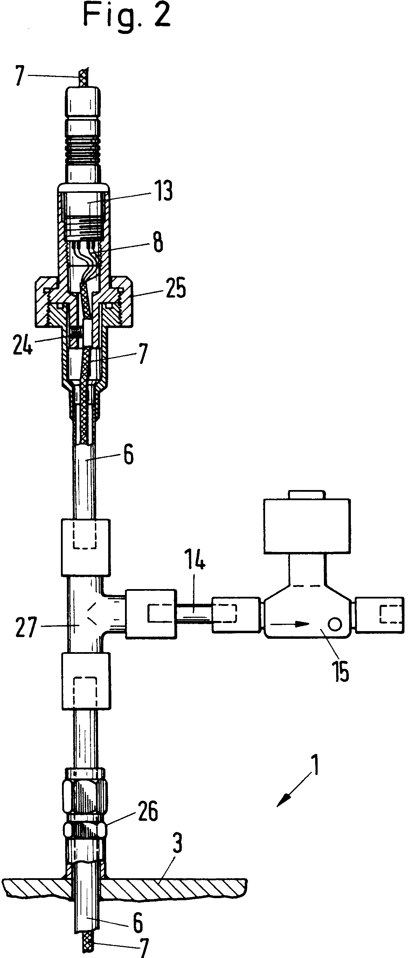

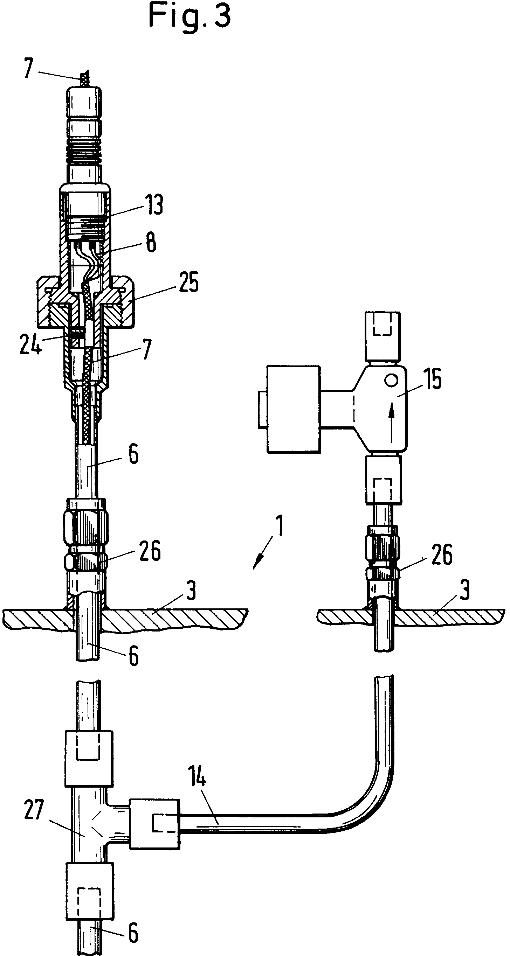

Figuren 2 und 3 zeigen mögliche Fortsetzungen des Verbindungsrohrs 6 durch den Aussenmantel 3 des Tieftemperaturbehälters 1. In einem elektrischen Anschlussstück 13 wird das Elektrokabel zunächst über seine Isolation mit einer Klemmschraube 24 geklemmt. Jede Ader 8 des Elektrokabels ist über eine gasdicht umschlossene Brücke nach aussen geführt. Das Anschlussstück 13 ist über eine Muffenverbindung 25 am Verbindungsrohr 6 befestigt. Das Verbindungsrohr 6 ist über eine Schneidringverbindung 26 zum Aussenmantel 3 des Tieftemperaturgefässes 1 abgedichtet. In Fig. 2 ist an dem Verbindungsrohr 6 ausserhalb des Aussenmantels 3 über ein T-Stück 27 eine seitliche Abzweigung 14 angebracht, die zu einem Absperrorgan 15 führt. Die Abzweigung 14 kann zu einem Druckmessgerät und über ein weiteres Absperrorgan in einen Entlastungsbehälter geführt werden, um unter kontrollierten Bedingungen die Muffenverbindung 25 zu lösen und den Trägerkörper 11 und das Anschlussstück 13 mit dem dazwischenliegendem Elektrokabel 7 und dem Sensor 5 durch eine neue Anordnung zu ersetzen.

In Fig. 3 liegt die seitliche Abzweigung 14 vom Verbindungsrohr 6 zwischen dem Innenmantel 2 und dem Aussenmantel 3 und ist durch eine separate Schneidringverbindung 26 aus dem Aussenmantel 3 herausgeführt. Wegen der guten Wärmeabfuhr an Tauchhülse 4 kann die zusätzlich über die seitliche Abzweigung 14 einfallende Wärme verkraftet werden. Mit einer Messanordnung nach Fig. 2 kann die Messabweichung wegen Wärmeeinfalls unter stationären Bedingungen kleiner als 0,02°K gehalten werden. Ausserdem entstehen nur geringfügige zeitliche Messverzögerungen bei wechselnden Temperaturen des Fluids 10.

**Patentansprüche**

1. Tieftemperaturmesseinrichtung bestehend aus einem Sensor (5), aus einer Tauchhülse (4), die durch den Innenmantel (2) eines Tieftemperaturbehälters (1) in ein Fluid (10) eintaucht und den Sensor (5) in sich aufnimmt, aus einem Verbindungsrohr (6) zwischen Tauchhülse (4) und Aussenmantel (3) des Tieftemperaturbehälters (1), durch welches der Sensor (5) einbringbar ist und durch welches der Sensor (5) über ein mehradriges Elektrokabel (7) mit der Umgebung ausserhalb des Aussenmantels (3) verbunden ist, dadurch **gekennzeichnet**, dass die Tauchhülse (4) Durchbrüche (9) aufweist, durch welche der Sensor (5) vom Fluid (10) umspülbar ist und dass innerhalb der Tauchhülse (4) ebenfalls durch Durchbrüche (9) Adern (8) des Elektrokabels (7) einzeln vom Fluid (10) auf einer Länge L von mehr als 100 Aderdurchmessern umspülbar sind.

2. Messeinrichtung nach Anspruch 1, dadurch gekennzeichnet, dass der Sensor (5) und dass die Adern (8) in ihrer Länge L auf einem Trägerkörper (11) befestigt sind, der von aussen über das Verbindungsrohr (6) bis in die Tauchhülse (4) verschiebbar ist.

3. Messeinrichtung nach Anspruch 2, dadurch gekennzeichnet, dass der Trägerkörper (11) Führungselemente (17, 18) aufweist, welche ihn in der Tauchhülse (4) seitlich positionieren.

4. Messeinrichtung nach Anspruch 2 oder 3, dadurch gekennzeichnet, dass die Adern (8) in ihrer Länge L entlang dem Trägerkörper (11) wendelförmig aufgewickelt sind und einen Abstand von mehr als einem Aderdurchmesser zur Wand der Tauchhülse (4) aufweisen.

5. Messeinrichtung nach Anspruch 2, dadurch gekennzeichnet, dass das mehradrige Elektrokabel (7) mit seiner Ummantelung am Trägerkörper (11) befestigt ist und eine so grosse Steifigkeit aufweist, dass der Trägerkörper (11) mit Sensor (5) durch Stossen des Elektrokabels (7) von aussen bis in die Tauchhülse (4) einschiebbar ist.

6. Messeinrichtung nach einem der Ansprüche 1, 2 oder 5, dadurch gekennzeichnet, dass am Elektrokabel (7) im Bereich zwischen Verbindungsrohr (6) und dem ersten Durchbruch (9) und/oder im Verbindunsrohr selbst Konvektionsbremsen (12) befestigt sind, die mit dem Elektrokabel verschiebbar sind und die den Durchtrittsquerschnitt für das Fluid (10) gegen aussen verringern.

7. Messeinrichtung nach einem der Ansprüche 1 bis 6, dadurch gekennzeichnet, dass das Elektrokabel (7) an ein von aussen abnehmbares, gasdichtes elektrisches Anschlussstück angeschlossen ist.

8. Messeinrichtung nach Anspruch 1, dadurch gekennzeichnet, dass das Verbindungsrohr (6) einen seitlichen Abgang (14) mit Absperrorgan (15) nach aussen aufweist, welches für eine Druckmessung und für eine Druckentlastung beim Auswechseln von Trägerkörper (11) und Sensor (5) am fluidgefüllten Tieftemperaturbehälter (1) auf Durchgang schaltbar ist.

9. Messeinrichtung nach Anspruch 1 oder 2, dadurch gekennzeichnet, dass die Tauchhülse (4) und der Trägerkörper (11) auf ihrer zum Fluid (10) hin gerichteten Stirnseite einen Durchbruch (4a, 11a) zum dahinterliegenden Raum aufweisen.

# Fig. 1

# Fig. 2

# Fig. 3

Europäisches
Patentamt

# EUROPÄISCHER RECHERCHENBERICHT

Nummer der Anmeldung

EP 91 81 0643

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 190 858 (SMITH METERS LIMITED)<br>* Seite 2, Zeile 9 - Seite 3; Abbildungen 1,2 *<br>--- | 1,2,4,7 | G01K13/02 |
| A | GB-A-739 694 (GENERAL MOTORS CORPORATION)<br>* Seite 2, Zeile 54 - Zeile 62; Abbildungen 1-3 *<br>--- | 1,7 | |
| A | US-A-3 513 703 (YOUNG)<br>* Spalte 4, Zeile 65 - Spalte 5, Zeile 2; Abbildung 6 *<br>----- | 1 | |
| | | | **RECHERCHIERTE SACHGEBIETE (Int. Cl.5 )**<br><br>G01K |

Der vorliegende Recherchenbericht wurde für alle Patentansprüche erstellt

| Recherchenort | Abschlußdatum der Recherche | Prüfer |
|---|---|---|
| DEN HAAG | 06 DEZEMBER 1991 | ALEX BATTESON |

EPO FORM 1503 03.82 (P0403)